# EUROPEAN PATENT APPLICATION

(11) **EP 4 625 082 A1**
(43) Date of publication of application: **01.10.2025**
(21) Application number: 25161906.0
(22) Date of filing: 05.03.2025
(51) Int. Cl.: G05B 23/02, G06N 3/045, G06N 3/084, G06N 3/088

(54) **ADAPTIVE CONDITION-BASED MACHINE HEALTH MONITORING**

(30) Priority: 25.03.2024 US 202463569648 P; 18.09.2024 US 202418888787
(71) Applicant: Analog Devices International Unlimited Company, Limerick (IE)
(72) Inventor: ULKAR, Mehmet Gorkem, Co. Limerick (IE); UYANIK, Gulnur Selda, Co. Limerick (IE); GOK, Alican, Co. Limerick (IE)
(74) Representative: Horler, Philip John

(57) **Abstract**

Systems and methods for detecting and diagnosing machine faults are discussed. An exemplary system includes at least one sensor node to sense a signal indicative of an operation status of a machine part, and a machine health analyzer circuit to generate a computational machine fault model comprising an autoencoder (AE) network and an associative module. The AE network encodes the sensed signal into signal features in a latent feature space, and decodes the signal features to produce a reconstructed signal. The associative module transforms the encoded signal features into an associative output using a dynamically updatable codebook. The machine health analyzer circuit detects a presence or absence of fault in the machine part based on reconstruction losses determined respectively from the reconstructed signal and the associative output. The detected fault can be presented to a user or to a process such as fault diagnosis or fault correction.

## Description

### TECHNICAL FIELD

This document relates generally to machine condition monitoring, and more particularly to adaptive condition-based detection and analysis of anomalies in a machine or a machine part.

### BACKGROUND

Manufacturing and processing facilities and plants usually contain many machines for various applications. These machines generally have complex mechanical components of all sizes and shapes. In some facilities, hundreds or even thousands of machines may exist in connection with various processes being performed to meet the manufacturing and processing requirements.

Condition-based monitoring (CbM) has been used in machine health monitoring including, for example, anomaly detection, fault or failure classification, and remaining useful time prediction, and has demonstrated advantages in reducing unplanned downtimes and extend the lifespan of machinery. The CbM solution may be implemented at the edge (e.g., machine parts) or in a remote processing environment (e.g., a server or a cloud-computing system). Edge-based CbM may offer advantages such as scalability and energy-efficiency.

Many machines, such as compressors, turbines, pumps, motors, and fans, include rotational components. In order to maintain, troubleshoot and operate these machines, it is often important to monitor the machines during operation and detect any potential component defects or operational faults. Rotational speed, generally measured as rotations per minute (RPM), can be used to assess operations of some rotational components of a machine. Some problems with the machines that are not readily apparent to the naked eyes or are otherwise difficult or impossible to ascertain can be identified by analyzing the RPM readings. For example, significant deviations of RPM readings from some specified machine specification, or away from past RPM readings, can be indicative of machine anomaly that requires maintenance, repair, or replacement of a machine part.

Accurate characterization of health condition in a machine or a machine part is important for detecting a machine fault and generating fault diagnostics. Improper or inaccurate characterization may lead to false detection or misdiagnosis of a fault. Conventionally, a human operator performs machine fault testing intermittently or in accordance with a maintenance schedule. For example, to detect faults in a rotating machine part, the operator can use a portable instrument to perform an RPM test, interpret the results, decide whether a machine fault is present, and recognize a fault type.

Sensors have been used for monitoring machine health and detecting anomalies. Machine operating conditions, such as rotational speeds of a rotating machine part, may be determined from the sensor data. For example, an RPM sensor, commonly known as a tachometer, can be installed on a machine to directly measure rotational speeds. Installation of such sensors, however, can be difficult because some machine parts to be monitored are not easily accessible. Moreover, the RPM sensors can be costly. Given the large numbers of machines in typical plants, the overall cost for machine health condition monitoring based on RPM sensors can be prohibitive. Consequently, direct RPM measurement is often limited to a few critical machines or machine parts.

### SUMMARY

The present document discusses systems, devices, and methods for detecting, isolating, and diagnosing machine faults, such as anomalies associated with a rotating machine part. As an alternative to direct measurements of rotational speeds, one or more edge nodes may be placed on or next to a rotating machine or machine part to measure machine vibration data such as via an accelerometer included in the edge node. The vibration data can be analyzed using an adaptive machine fault model that has been trained to encode and decode the input vibration signal, and to determine a presence or absence of machine fault based on a reconstruction loss of the input vibration signal. In accordance with one embodiment, an exemplary system includes at least one sensor node to sense a signal indicative of an operation status of a machine part, and a machine health analyzer circuit to generate a computational machine fault model comprising an autoencoder (AE) network and an associative module. The AE network encodes the sensed signal into signal features in a latent feature space, and decodes the signal features to produce a reconstructed signal. The associative module transforms the encoded signal features into an associative output using a dynamically updatable codebook. The machine health analyzer circuit detects a presence or absence of fault in the machine part based on reconstruction losses determined respectively from the reconstructed signal and the associative output. The detected fault can be presented to a user or to a process such as fault diagnosis or fault correction.

Example 1 is a system for monitoring machine health conditions. The system comprises: at least one sensor node configured to sense a signal indicative of machine operation status from a specific machine part; a machine health analyzer circuit configured to: generate a computational machine fault model that comprises (i) an autoencoder (AE) network to encode the sensed signal into a plurality of signal features in a latent feature space, and to produce a reconstructed signal from the encoded plurality of signal features, and (ii) an associative module to transform the encoded signal features into an associative output using a dynamically updatable codebook; apply the sensed signal to the computational machine fault model to determine a signal reconstruction loss using the reconstructed signal produced by the AE network and the associative output produced by the associative module; and detect a presence or absence of fault in the specific machine part based at least in part on the determined reconstruction loss; and a user interface configured to alert a user about the detected presence of fault.

In Example 2, the subject matter of Example 1 optionally includes the at least one sensor node that can include an accelerometer configured to sense a machine vibration signal from a rotating machine part at a specific rotating speed, wherein the machine health analyzer circuit is configured to detect the presence of absence of fault in the rotating machine part based at least in part on the reconstruction loss determined at the specific rotating speed.

In Example 3, the subject matter of any one or more of Examples 1-2 optionally include the signal reconstruction loss that can include one or more of (i) a first reconstruction loss represented by a difference metric between the reconstructed signal and the sensed signal, or (ii) a second reconstruction loss represented by a difference metric between the associative output and the sensed signal, wherein the machine health analyzer circuit is configured to detect the presence or absence of fault in the specific machine part based on one or more of the first reconstruction loss or the second reconstruction loss.

In Example 4, the subject matter of Example 3 optionally includes the signal reconstruction loss that can include both the first reconstruction loss and the second reconstruction loss, wherein the machine health analyzer circuit is configured to detect the presence or absence of fault in the specific machine part based on a combination of (i) a comparison of the first reconstruction loss to a first reconstruction loss threshold (RL_{TH-D}) associated with the AE network, and (ii) a comparison of the second reconstruction loss to a second reconstruction loss threshold (RL_{TH-A}) associated with the associative module.

In Example 5, the subject matter of Example 4 optionally includes the machine health analyzer circuit that can be configured to: determine an absence of fault in the specific machine part when at least one of the first reconstruction loss is less than the RL_{TH-D}, or the second reconstruction loss is less than the RL_{TH-A}; and determine a presence of fault in the specific machine part when (i) the first reconstruction loss is greater than or equal to the RL_{TH-D}, and (ii) the second reconstruction loss is greater than or equal to the RL_{TH-A}.

In Example 6, the subject matter of any one or more of Examples 4-5 optionally includes the machine health analyzer circuit that can be configured to: access or construct a database of training set of sensor signals indicative of operation status of machine parts of a same type as the specific machine part; and determine the first reconstruction loss threshold (RL_{TH-D}) based on a statistical measure of reconstruction losses respectively determined for the sensor signals in the training set.

In Example 7, the subject matter of any one or more of Examples 4-6 optionally includes the machine health analyzer circuit that can be configured to: access or construct a database of training set of sensor signals indicative of operation status of machine parts of a same type as the specific machine part, the training set comprising a plurality of signal clusters each comprising sensor signals collected from at least a portion of the machine parts operating under a specific mode; and determine the second reconstruction loss threshold (RL_{TH-A}) based on intra-cluster distances respectively determined for the plurality of signal clusters in the training set.

In Example 8, the subject matter of Example 7 optionally includes the machine health analyzer circuit that can be configured to determine the second reconstruction loss threshold (RL_{TH-A}) based on a statistical measure of the intra-cluster distances respectively determined for the plurality of signal clusters in the training set.

In Example 9, the subject matter of Example 8 optionally includes that training set that can include machine vibration signals respectively sensed from rotating machine parts of a same type as the specific machine part at different rotating speeds or speed ranges, wherein the plurality of signal clusters each comprise machine vibration signals collected under a specific rotating speed or speed range.

In Example 10, the subject matter of any one or more of Examples 7-9 optionally includes the machine health analyzer circuit that can be configured to determine the second reconstruction loss threshold (RL_{TH-A}) further based on a statistical measure of inter-cluster reconstruction losses among the plurality of signal clusters in the training set.

In Example 11, the subject matter of any one or more of Examples 1-10 optionally includes the machine health analyzer circuit that can be configured to construct the dynamically updatable codebook using sensor signals collected from fault-free machine parts of a same type as the specific machine part, the dynamically updatable codebook establishing a mapping from (i) stored encoded signal features of the sensor signals collected from the fault-free machine parts to (ii) stored reconstructed sensor signals.

In Example 12, the subject matter of Example 11 optionally includes the machine health analyzer circuit that can be configured to determine the associative output for the sensed signal using the associative module, including to: search the stored encoded signal features in the dynamically updatable codebook for a closest entry to the encoded signal features of the sensed signal; and determine the associative output for the sensed signal to be one of the stored reconstructed signals in the dynamically updatable codebook that corresponds to the closest entry.

In Example 13, the subject matter of any one or more of Examples 11-12 optionally includes the machine health analyzer circuit that can be configured to: receive from a user an adjudication of a fault of the specific machine part falsely detected by the AE network; and update the dynamically updatable codebook using sensor signals corresponding to the falsely detected fault in accordance with the adjudication.

Example 14 is a method for monitoring machine health condition. The method comprises steps of: sensing a signal indicative of machine operation status using at least one sensor node deployed to a specific machine part; generating, via a machine health analyzer circuit, a computational machine fault model that comprises (i) an autoencoder (AE) network to encode the sensed signal into a plurality of signal features in a latent feature space, and to produce a reconstructed signal from the encoded plurality of signal features, and (ii) an associative module to transform the encoded signal features into an associative output using a dynamically updatable codebook; applying the sensed signal to the computational machine fault model to determine a signal reconstruction loss using the reconstructed signal produced by the AE network and the associative output produced by the associative module; detecting a presence or absence of fault in the specific machine part based at least in part on the determined reconstruction loss; and generating, via a user interface, an alert to a user about the detected presence of fault.

In Example 15, the subject matter of Example 14 optionally includes sensing the signal indicative of machine operation status that can include sensing a machine vibration signal from a rotating machine part at a specific rotating speed, wherein detecting the presence of absence of fault in the rotating machine part is based at least in part on the reconstruction loss determined at the specific rotating speed.

In Example 16, the subject matter of any one or more of Examples 14-15 optionally includes the signal reconstruction loss that can include one or more of (i) a first reconstruction loss represented by a difference metric between the reconstructed signal and the sensed signal, or (ii) a second reconstruction loss represented by a difference metric between the associative output and the sensed signal, wherein detecting the presence or absence of fault in the specific machine part is based on one or more of the first reconstruction loss or the second reconstruction loss.

In Example 17, the subject matter of Example 16 optionally includes the signal reconstruction loss that can include both the first reconstruction loss and the second reconstruction loss, wherein detecting the presence or absence of fault in the specific machine part is based on a combination of (i) a comparison of the first reconstruction loss to a first reconstruction loss threshold (RL_{TH-D}) associated with the AE network, and (ii) a comparison of the second reconstruction loss to a second reconstruction loss threshold (RL_{TH-A}) associated with the associative module.

In Example 18, the subject matter of Example 17 optionally includes detecting the presence or absence of fault in the specific machine part includes: determining an absence of fault in the specific machine part when at least one of the first reconstruction loss is less than the RL_{TH-D}, or the second reconstruction loss is less than the RL_{TH-A}; and determining a presence of fault in the specific machine part when (i) the first reconstruction loss is greater than or equal to the RL_{TH-D}, and (ii) the second reconstruction loss is greater than or equal to the RL_{TH-A}.

In Example 19, the subject matter of any one or more of Examples 17-18 optionally include receiving or constructing a training set of sensor signals indicative of operation status of machine parts of a same type as the specific machine part; and determining the first reconstruction loss threshold (RL_{TH-D}) based on a statistical measure of reconstruction losses respectively determined for the sensor signals in the training set.

In Example 20, the subject matter of any one or more of Examples 17-19 optionally includes receiving or constructing a training set of sensor signals indicative of operation status of machine parts of a same type as the specific machine part, the training set comprising a plurality of signal clusters each comprising sensor signals collected from at least a portion of the machine parts operating under a specific mode; and determining the second reconstruction loss threshold (RL_{TH-A}) based on a statistical measure of intra-cluster distances respectively determined for the plurality of signal clusters in the training set.

In Example 21, the subject matter of Example 20 optionally includes the training set that can include machine vibration signals sensed from rotating machine parts of a same type as the specific machine part at different rotating speeds or speed ranges, wherein the plurality of signal clusters each comprise machine vibration signals collected under a specific rotating speed or speed range.

In Example 22, the subject matter of any one or more of Examples 20-21 optionally includes determining the second reconstruction loss threshold (RL_{TH-A}) is further based on a statistical measure of inter-cluster reconstruction losses among the plurality of signal clusters in the training set.

In Example 23, the subject matter of any one or more of Examples 14-22 optionally includes constructing the dynamically updatable codebook using sensor signals collected from fault-free machine parts of a same type as the specific machine part, the dynamically updatable codebook establishing a mapping from (i) stored encoded signal features of the sensor signals from the fault-free machine parts to (ii) stored reconstructed sensor signals.

In Example 24, the subject matter of Example 23 optionally includes determining the associative output for the sensed signal using the associative module, including: searching the stored encoded signal features in the dynamically updatable codebook for a closest entry to the encoded signal features of the sensed signal; and determining the associative output for the sensed signal to be one of the stored reconstructed signals in the dynamically updatable codebook that corresponds to the closest entry.

In Example 25, the subject matter of any one or more of Examples 23-24 optionally includes receiving from the user interface an adjudication of a fault of the specific machine part falsely detected by the AE network; and updating the dynamically updatable codebook using sensor signals corresponding to the falsely detected fault in accordance with the adjudication.

This Overview is an overview of some of the teachings of the present application and not intended to be an exclusive or exhaustive treatment of the present subject matter. Further details about the present subject matter are found in the detailed description and appended claims. Other aspects of the disclosure will be apparent to persons skilled in the art upon reading and understanding the following detailed description and viewing the drawings that form a part thereof, each of which are not to be taken in a limiting sense. The scope of the present disclosure is defined by the appended claims and their legal equivalents.

### BRIEF DESCRIPTION OF THE DRAWINGS

Various embodiments are illustrated by way of example in the figures of the accompanying drawings. Such embodiments are demonstrative and not intended to be exhaustive or exclusive embodiments of the present subject matter.
FIG. 1 is a block diagram illustrating an example of a machine health monitoring system for detecting, isolating, and diagnosing anomalies in a machine part.
FIG. 2 illustrates an example of a deployable edge node to be mounted on a machine or machine part to sense information about machine operation status.
FIG. 3 illustrates an example of an associative autoencoder (AAE) comprising an autoencoder (AE) network and an associative module.
FIG. 4 is a flowchart illustrating an example algorithm for detecting machine fault using a reconstructed signal produced an AE network and associative output of an associative module.
FIGS. 5A-5C illustrate example distributions of intra-cluster distances (calculated via mean squared error (MSE) and its use in setting the reconstruction loss threshold for the associative module.
FIGS. 6A-6B illustrate an example of detection performance of an AAE in detecting faults in rotational machine parts, and a comparison to detection using the AE network alone.
FIGS. 7A-7B illustrate another example of detection performance of an AAE in detecting faults in rotational machine parts, and a comparison to detection using the AE network alone.
FIG. 8 is a flowchart illustrating an example method of adaptive condition-based monitoring of machine health status.
FIG. 9 illustrates generally a block diagram of an example machine upon which any one or more of the techniques (e.g., methodologies) discussed herein may perform.

### DETAILED DESCRIPTION

Rotational speed may be estimated indirectly using information of machine characteristics, such as vibration, energy profiles, magnetic field, temperature, or acoustic information produced by the rotational movement of some machine parts. RPM estimates may be used to detect presence or absence of machine faults. For example, most machines have a typical vibration level and a frequency spectrum with a characteristic shape when the machine is in a good operating condition. If a machine fault develops, the dynamic processes in the machine may change, so do the forces acting on the machine. This may result in corresponding changes in vibration level and vibration spectrum. For example, excessive vibration levels at certain frequencies may indicate a particular machine fault or operational problem. The defect frequencies are directly related to the machine speed as multiples of RPM. By monitoring the change in the vibration level and spectrum, a trained operator can determine if a machine fault is present, and if so, the type of fault most likely to have been involved. Indirect RPM measurement, however, typically requires an operator to interpret the vibration spectrum, which may not be suitable for automatic machine fault detection and diagnosis. In addition to the lack of automaticity, conventional machine health monitoring methods generally do not support continuous monitoring when the machine is operating in its normal environment.

Condition-based monitoring (CbM) for machine fault detection may involve trained algorithms, such as machine-learning (ML) based algorithms, to identify a machine fault and pinpoint exact cause and timing of such fault. Training of such detection algorithms can be extremely challenging, partially because of practical difficulties in collecting comprehensive, realistic fault data representative of various (and ideally a large amount of) fault or failure modes. One approach is to train the detection algorithm with only healthy, fault-free machine data. A detected drift from a recognizable healthy condition can be predictive of anomalies in a machine or machine part. However, due to variations in data collection conditions (e.g., seasonal changes or load variations in the machine), some healthy conditions (also referred to as "new normalities") previously unseen to the detection algorithm during algorithm training may be different enough from the previously seen healthy conditions. These new normalities may be falsely detected by the algorithm and labeled as "anomalies", leading to unacceptable false alarm rates. Although such healthy "new normalities" can be used for finetuning the entire fault detection algorithm at the cloud or finetuning only a limited part of the model at the edge node due to limited computation power, neither approach is ideal. In the first method, new types of normalities can emerge any time at the lifespan of the machinery, and multiple nodes can create vast amount of computation cost for the cloud. In the second method, the performance after limited fine-tuning is generally far from the expected. For at least the reasons stated above, the present inventors have recognized an unmet need for improved condition-based machine health monitoring techniques particularly in fault or anomaly detection applications.

Disclosed herein are systems, devices, and methods for detecting, isolating, and diagnosing machine faults, such as anomalies associated with a rotating machine part, using an adaptive machine fault detection model. In accordance with one embodiment, an exemplary system includes at least one sensor node to sense a signal indicative of an operation status of a machine part, and a machine health analyzer circuit to generate a computational machine fault model that comprises an autoencoder (AE) network and an associative module. The AE network encodes the sensed signal into signal features in a latent feature space, and decodes the signal features to produce a reconstructed signal. The associative module transforms the encoded signal features into an associative output using a dynamically updatable codebook. The machine health analyzer circuit detects a presence or absence of fault in the machine part based on reconstruction losses determined respectively from the reconstructed signal and the associative output. The detected fault can be presented to a user or to a process such as fault diagnosis or fault correction.

Compared to conventional machine fault detection techniques, the adaptive machine fault detection in accordance with various embodiments that will be discussed in this document has several advantages. First, in contrast to the conventional time-based monitoring wherein machines are tested at particular time intervals, the present technology as discussed herein utilizes condition-based monitoring (CbM) in which the testing and anomaly resolution can occur only upon detection of a problem or a suspected problem. As such, the number of unnecessary machine servicing and testing sessions and shutdowns and their associated costs can be substantially reduced. Costly machine breakdowns can be reduced or even eliminated in some cases due to the ability to detect faults earlier before they can do much damage. Second, compared to conventional hand-held or other portable measurement and detection solutions, the present technology provides the operators with a means for continuous monitoring of machine condition when the machine is operating in its normal environment. The fault analysis may also help increase load on the machine for increased throughput without increasing the likelihood of machine fault. Third, compared to conventional autoencoder (AE)-based fault detection, the present technology augments the AE network with an additional associative module to recognize "new normalities" unseen to the AE network. The associative module can be easily adaptable to the new normalities at the edge, thereby achieving adaptable anomaly detection for CbM. The associative module can be updated frequently to incorporate expert knowledge about "new normalities" previously not presented to the detection algorithm, such as through an adjudication of falsely detected machine faults. As such, the false alarm rate for detecting machine faults can be reduced, and the cost for machine monitoring and maintenance can also be reduced.

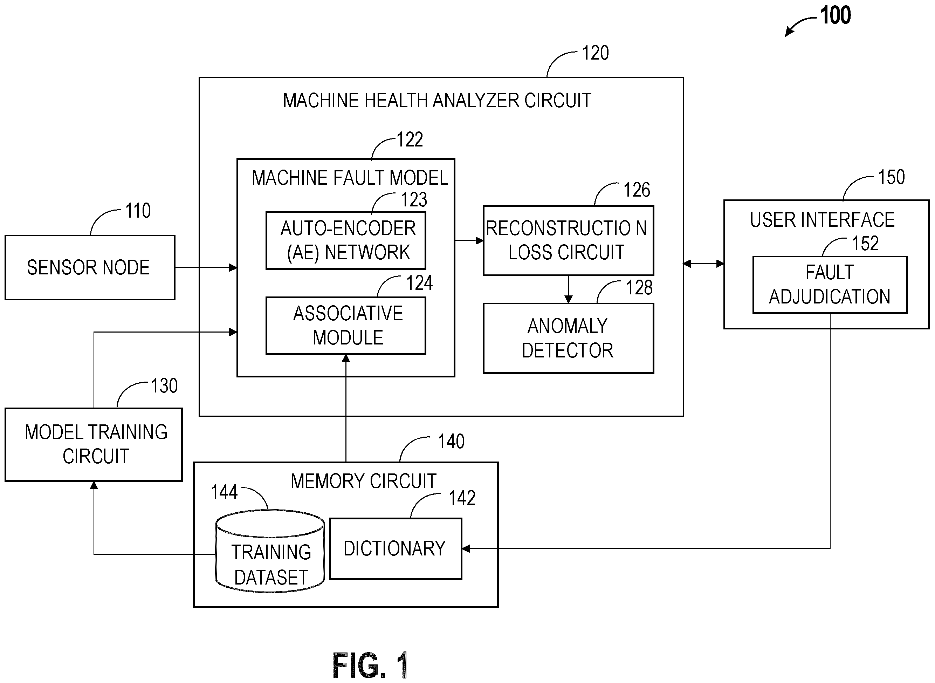

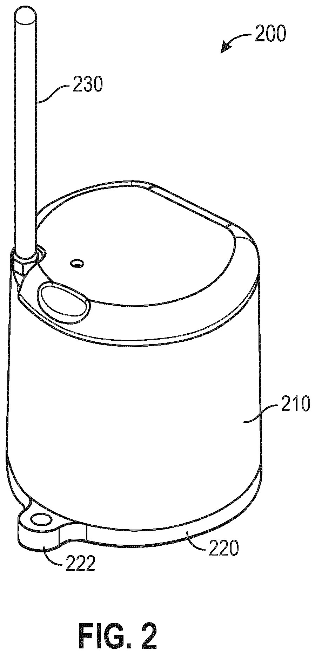

FIG. 1 is a block diagram illustrating an example of a machine health monitoring system 100 for detecting, isolating, and diagnosing machine anomalies in a machine part. The anomaly may be associated with one or more components, such as motors, gears, bearings, transmission, among other components. The system 100 may include one or more of a sensor node 110, a machine health analyzer circuit 120, a model training circuit 130, a memory circuit 140, and a user interface 150. The sensor node 110 may be deployed on a machine or a machine part, and acquire sensor data (e.g., a signal) indicative of machine operation status or machine characteristics including, of example, vibration, energy profile, magnetic field characteristics, temperature of the machine and/or surrounding environment, or acoustic properties produced by the rotating machine parts. The sensor node 110 may be programmed to monitor machine characteristics continuously when the machine operates in its normal environment (e.g., a normal operating condition, as opposed to a testing mode distinct from the normal operating condition). In an example, the sensor node 110 may be mounted on a machine or a machine part using treaded mounting, or a non-invasive means that does not cause permanent alteration to the part of the machine in contact with the edge node. Non-invasive mounts may include magnet, epoxy, or other adhesives. In one example, the sensor node 110 may include an accelerometer configured to measure vibration of the machine or machine part on which the sensor node 110 is mounted. The accelerometer can be a high-bandwidth accelerometer capable of sensing machine vibration in high fidelity. The accelerometer can be a single-axis sensor in one example, or a multi-axis (e.g., two- or three-axis) sensor in another example. The sensor node 110 may include a battery to provide long lifetime of operation and low maintenance cost. The battery can be a rechargeable battery. In some examples, the sensor node 110 may include an energy-harvesting module to collect energy from an external source (e.g., machine rotations or other kinetic energy), and to convert and store the energy to operate the sensor node 110. Examples of the sensor node and its physical configuration are discussed below with reference to FIG. 2.

In some examples, the sensor node 110 may process the sensed signal or data indicative of machine characteristics and generate machine operational parameters. Examples of the machine operational parameters may include one or more of rotating speed estimate (e.g., RPM), statistical or physical features (e.g., temporal or spectral features), summary statistics, machine health indicators, and diagnostic features indicative of various types of faults. In some examples, the sensor node 110 may additionally generate indicators of operational states, such as an ON/OFF state, of a machine or a machine part.

In addition or alternative to accelerometers configured to sense machine vibration, the sensor node 110 may include sensor types of modalities configured to sense various machine characteristics such as one or more of magnetic field, temperature, or acoustic information, produced by the rotating machine components. In some examples, the sensor node 110 may sense one or more physical parameters in connection with the operation of a machine or machine part, and/or environmental parameters. Examples of such parameters may include position, speed, acceleration, or other motion descriptors; electrical parameters such as voltage, current, and impedance; stress, strain, and shock associated with a machine or a part thereof; ambient environmental parameters such as temperature, pressure, and humidity; among others. One or more of those sensed signals or parameters may be used for detecting, isolating, and diagnosing machine anomalies.

The machine health analyzer circuit 120 may analyze the sensed signals or data received from the sensor node 110, and based on the analysis, detect an anomaly such as a machine fault. In an example, at least a portion of the machine health analyzer circuit 120 may be implemented as a part of a microprocessor circuit. The microprocessor circuit may be a dedicated processor such as a digital signal processor, application specific integrated circuit (ASIC), microprocessor, or other type of processor for processing the information of machine characteristics. Alternatively, the microprocessor circuit may be a processor that may receive and execute a set of instructions of performing the functions, methods, or techniques described herein.

The machine health analyzer circuit 120 may include circuit sets comprising one or more circuits or sub-circuits, such as a machine fault model 122, a reconstruction loss circuit 126, and an anomaly detector 128. These circuit sets may, individually or in combination, perform the functions, methods, or techniques described herein. In an example, hardware of the circuit set may be immutably designed to carry out a specific operation (e.g., hardwired). In an example, the hardware of the circuit set may include variably connected physical components (e.g., execution units, transistors, simple circuits, etc.) including a computer readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuit set in hardware via the variable connections to carry out portions of the specific operation when in operation. Accordingly, the computer readable medium is communicatively coupled to the other components of the circuit set member when the device is operating. In an example, any of the physical components may be used in more than one member of more than one circuit set. For example, under operation, execution units may be used in a first circuit of a first circuit set at one point in time and reused by a second circuit in the first circuit set, or by a third circuit in a second circuit set at a different time.

The machine fault model 122 can be a computational model (e.g., a circuit, or instructions implemented in and executable by a microprocessor) that transforms an input sensor signal into a signal reconstruction output. In some examples, the machine fault model 122 may preprocess the received sensor signal prior to fault detection and analysis. By way of example and not limitation, the pre-processing may include windowing the continuously recorded sensor signal into signal segments of a specific duration (e.g., 0.5 seconds in one example). The signal segments may be transformed using Fourier transform into frequency domain, where spectral features of the signal segments may be extracted for fault detection. In some cases, fault effects and rotation characteristics of certain rotational machine parts can be more visible to track in the frequency domain than in the time domain. The pre-processing may further include spectral power normalization inside the window, and Gaussianization (Quantile Transformation) of the spectral feature in one or more frequency bins to improve the stability and robustness of anomaly detection algorithms as will be discussed further below.

The machine fault model 122 may include an autoencoder (AE) network 123 and an associative module 124. The AE network 123 may include an encoder to encode the received input sensor signal into a plurality of signal features, and a decoder to reconstruct a signal from the encoded plurality of signal features. The associative module 124 can transform the encoded signal features (or a portion thereof) produced by the AE network 123 into an associative output using a dynamically updatable dictionary 142, also referred to as a "codebook", that can be created and stored in the memory circuit 140. As will be discussed further below, the addition of the associative module 124 can augment the AE network 123 in detecting certain types or modes of machine faults, particularly those unseen to the AE network 123, thereby boosting the overall fault detection accuracy and efficiency. The machine fault model 122 henceforth is also referred to as an associative autoencoder (AAE).

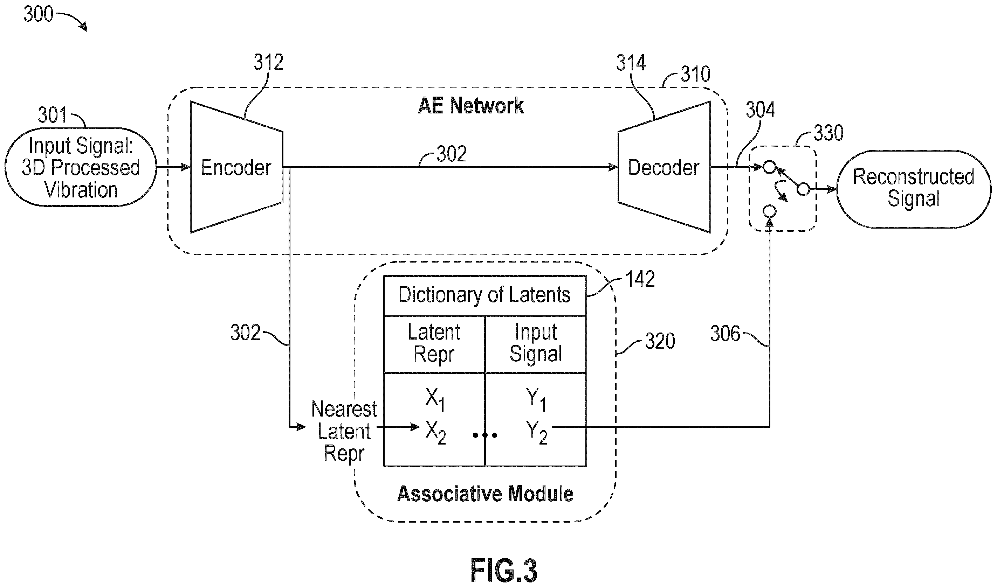

An example of the machine fault model 122 is illustrated in FIG. 3, which shows an AAE 300 comprising an AE network 310 (which is an embodiment of the AE network 123) and an associative module 320 (which is an embodiment of the associative module 124). The AE network 310 may include an encoder 312 and a decoder 314. The encoder 312 may first expand the input sensor signal 301 (produced by the sensor node 110) to higher dimensions, and then shrink the higher dimension signal into a plurality of signal features 302 having a lower signal dimension than that of the original input sensor signal 301. The plurality of signal features 302 are also referred to as latent representations in a latent space. The decoder 314 may work in the reverse order to produce a first reconstructed signal 304 from the encoded plurality of signal features 302 (i.e., the latent representations).

The associative module 320 may transform the encoded plurality of signal features 302 produced by the encoder 312 into a second reconstructed sensor signal 306 using the dynamically updatable dictionary 142 created and stored in the memory circuit 140. The dictionary 142 represents a mapping from encoded signal features (or latent representations, denoted by "X") of sensor signals sensed from machine parts of the same type (e.g., motors) to corresponding reconstructions of the input sensor signals (denoted by "Y").

The dictionary 142 can be structured as a vector database, an association map, or other data structures stored and maintained in the memory circuit 140. In an example, the dictionary 142 may be constructed using sensor signals collected from fault-free machine parts of the same type (e.g., fault-free motors). The dictionary 142 may include multiple entries (e.g., entries of a vector database) X₁, X₂, ..., X_{N} each representing latent representations of a sensor signal sensed from a fault-free machine part (e.g., motor) at a particular operating mode (e.g., rotating speed). The entries of latent representations X₁, X₂, ..., X_{N} are each mapped to corresponding signal reconstructions Y₁, Y₂, ... , Y_{N}.

The dictionary 142 may be updated regularly or in accordance with a set schedule. In some examples, the dictionary 142 may be updated "on the fly", i.e., updated dynamically during the machine health monitoring and real-time fault detection. Because the stored latent representations in the dictionary 142 may be taken from sensor signals collected from fault-free machine parts, the dictionary 142 can be particularly useful in recognizing "new normalities", i.e., actual healthy conditions previously unseen to the machine fault model (particularly unseen to the AE network 310) during algorithm training. The healthy conditions may be recognized by a user, such as a domain expert, through fault adjudication 152 via the user interface 150. For example, to dynamically update the dictionary 142, a user may review data associated with a machine fault detected by the AE network 310, and provide a fault adjudication 152 that the falsely detected fault is actually a normal, healthy condition unseen to the detection model before. Then the encoded signal features or latent representation X_{N+1} of the sensor signal corresponding to the falsely detected fault (and adjudicated as a new normal and healthy) condition may be added to the dictionary 142, along with the corresponding reconstruction Y_{N+1} of said sensor signal. The updated dictionary 142 may then be used in future real-time anomaly detection.

To use the dictionary 142 to transform the encoded input signal features 302 (or a portion thereof) into an associative output, the machine health analyzer circuit 120 may search the entries of the dictionary 142 (i.e., the encoded signal features X₁, X₂, ... ) for an entry that matches the encoded signal features 302, such as one satisfying a nearest neighbor criterion based on a distance metric between the encoded signal features 302 and the dictionary entries X₁, X₂, ... , etc. If a match Xⱼ is found (e.g., the distance between the encoded signal features 302 and Xⱼ is closest among the other candidates in the dictionary), then the reconstruction sensor signal Yⱼ, which corresponds to the matching entry Xⱼ, is determined to be the second reconstructed signal 306 for the encoded signal features 302.

The reconstruction loss circuit 126 may determine a reconstruction loss using a difference metric (such as a mean-squared error, or MSE) between the input sensor signal 301 and the reconstructed signal, such as one or more of the first reconstructed signal 304 (i.e., the reconstructed signal produced by the AE network 310) or the second reconstructed signal 306 (i.e., the associative output produced by the associative module 320). The anomaly detector 128 may compare the reconstruction loss to an acceptance criterion, such as a threshold value, to determine whether or not a machine fault is present. In one example, the reconstruction loss may be computed using a difference metric (e.g., MSE) between the first reconstructed signal 304 and the sensed signal 301. The reconstruction loss can then be compared to a first reconstruction loss threshold (RL_{TH-D}) associated with the AE network 123. A fault or anomaly is determined to be present if the reconstruction loss exceeds the first threshold RL_{TH-D}, and no fault or anomaly is deemed to be present if the reconstruction loss is below the first threshold RL_{TH-D}. In another example, the reconstruction loss may be computed using a difference metric (e.g., MSE) between the second reconstructed signal 306 and the sensed signal 301. The reconstruction loss can then be compared to a second reconstruction loss threshold (RL_{TH-A}) associated with the associative module 124. A fault or anomaly is determined to be present if the reconstruction loss exceeds the second threshold RL_{TH-A}, and no fault or anomaly is deemed to be present if the reconstruction loss is below the second threshold RL_{TH-A}.

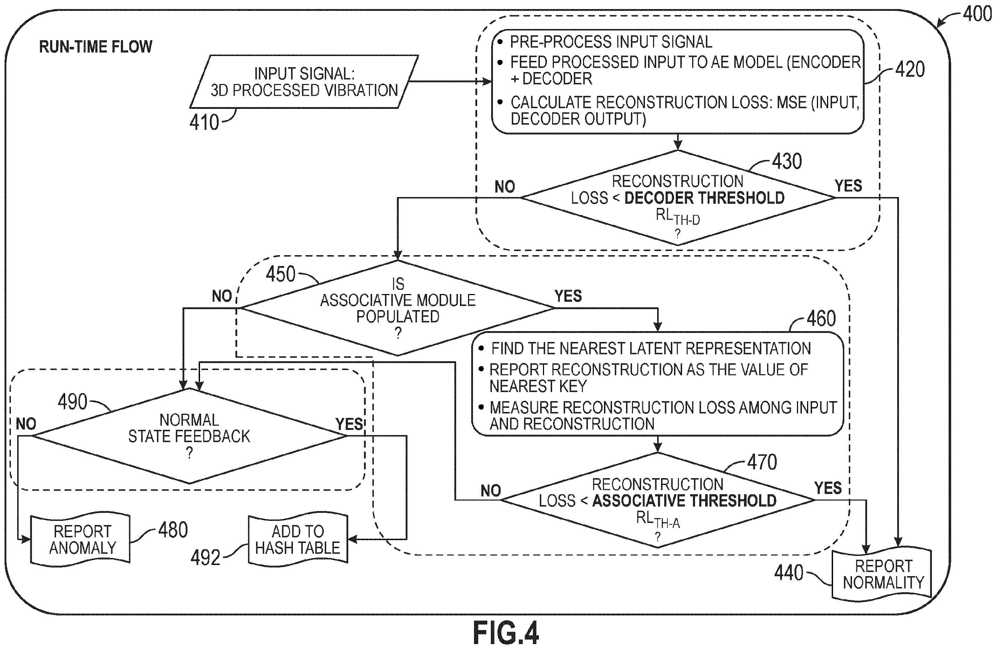

In some examples, the reconstruction loss may be determined using a combination of the first reconstruction loss between the first reconstructed signal 304 and the sensed signal 301, and the second reconstruction loss between the second reconstructed signal 306 and the sensed signal 301. As illustrated in FIG. 3, the fault detection algorithm can be configured by the user via a programming control 330 on the user interface 150, such as selectively activating any one or more of the AE network 310 or the associative module 320, or combining the first reconstructed signal 304 and the second reconstructed signal 306 in a particular combination or arrangement (such as a decision tree, or other forms of logic combination). Example methods for detecting machine faults using reconstruction losses respectively determined from the reconstruction signal produced by the AE network and the associative output of the associative module are discussed below with respect to FIG. 4.

Referring back to FIG. 1, the machine fault model 122, including the AE network 123 and the associative module 124, may be generated using the model training circuit 130. In an example, the model training circuit 130 may be included in the machine health analyzer circuit 120. Model training includes determining a reconstruction loss threshold. Depending on the machine fault model used (e.g., one or more of the auto-encoder (AE) network 123 or the associative module 124), this may include the first reconstruction loss threshold (RL_{TH-D}) associated with the AE network 123, the second reconstruction threshold RL_{TH-A} associated with the associative module 124, or both. In one example, the model training circuit 130 may access a database of training set 144 stored in the memory circuit 140. The training set 144 may include a plurality of sensor signals indicative of machine characteristics of machine parts of the same type (e.g., vibration signals sensed from rotating motors via accelerometers). The model training circuit 130 may determine reconstruction losses respectively for the sensor signals in the training set 144, and determine the first reconstruction loss threshold (RL_{TH-D}) associated with the AE network 123 based on a statistical measure of the reconstruction losses respectively determined for the sensor signals in the training set 144. In one example, to cover all the seen normal samples, 100% percentile, i.e., the maximum of the reconstruction loss distribution, can be used to determine RL_{TH-D}. In some examples, the threshold value RL_{TH-D} thus determined may be relaxed with a coefficient (k) greater than one (e.g., *k* = 1.1 in an example) to enable a relatively small generalization effect for the unseen normal samples after one representative is introduced to the system.

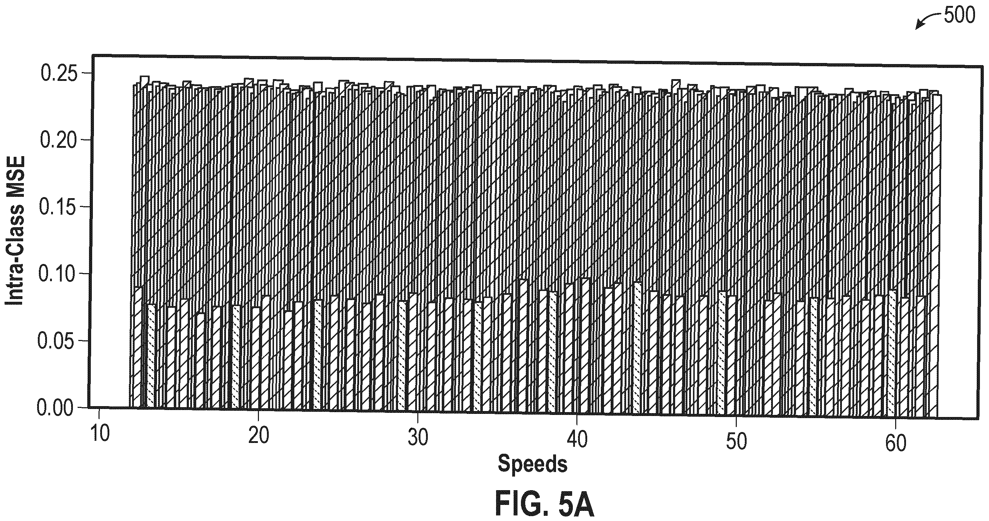

The model training circuit 130 may additionally or alternatively determine the second reconstruction threshold RL_{TH-A} associated with the associative module 124 using the training set 144. The training set 144 may be formulated into a plurality of signal clusters each comprising sensor signals collected from the machine parts of the same type (e.g., motors) under substantially the same operating mode, such as motor rotating speed. In an example, the training set 144 may include motor vibration signals that are clustered according to motor rotating speeds, such that each cluster comprises machine vibration signals collected from motors rotating at substantially the same speed or within a specific speed range. The model training circuit 130 may determine intra-cluster distances respectively for each cluster in the training set 144. In an example, the distance may be computed as a mean squared error (MSE) between pairs of signals of same clusters, and the statistical measures of the intra-cluster MSE distances (hereinafter "intra-cluster MSE") may be calculated for each cluster. Examples of intra-cluster MSE and its use in determining the reconstruction loss threshold (RL_{TH-A}) for the associative module are discussed below with respect to FIGS. 5A-5B.

In some examples, in addition or alternative to the intra-cluster MSE, inter-cluster MSE distances may be used to differentiate among the normalities and anomalies for the same operating mode (e.g., the same rotating speed). In some examples, the second reconstruction loss threshold (RL_{TH-A}) may be determined further based on a statistical measure of inter-cluster reconstruction losses among the plurality of signal clusters in the training data. In this case, minimum distance between the signal clusters may be used to set the associative threshold.

In various examples, the first reconstruction loss threshold (RL_{TH-D}) associated with the AE network 123 and the second reconstruction threshold RL_{TH-A} associated with the associative module 124 may be determined, and the dictionary 142 may be initially constructed, prior to the AAE-based detector can be deployed into the field for real-time machine fault detection, such as in accordance with the algorithm 400 as illustrated in FIG. 4.

Portions of the machine health monitoring system 100 may be implemented using hardware, software, firmware, or combinations thereof. In an example, at least a portion of the machine health monitoring system 100 may be implemented using an application-specific circuit that may be constructed or configured to perform one or more particular functions, or may be implemented using a general-purpose circuit that may be programmed or otherwise configured to perform one or more particular functions. Such a general-purpose circuit may include a microprocessor or a portion thereof, a microcontroller or a portion thereof, or a programmable logic circuit, a memory circuit, a network interface, and various components for interconnecting these components. For example, a "comparator" may include, among other things, an electronic circuit comparator that may be constructed to perform the specific function of a comparison between two signals or the comparator may be implemented as a portion of a general-purpose circuit that may be driven by a code instructing a portion of the general-purpose circuit to perform a comparison between the two signals.

FIG. 2 illustrate an example of a deployable edge node 200 to be mounted on a machine or machine part to sense information about machine characteristics, such as vibration, energy profiles, magnetic field, temperature, or acoustic information produced by the rotational movement of machine components. The edge node 200, which is an embodiment of the sensor node 110 of FIG. 1, includes a case 210 enclosing mechanical and electrical parts for sensing information of machine characteristics, a base 220 sized and shaped or otherwise configured to be mounted one a machine or a machine part, and an antenna 230. The case 210 may be made of metal or polymer. In an example, the case 210 may have a water-resistant coating on its outer surface, such that the edge node 200 may function properly when exposed to excessive humidity without compromising the longevity. The base 220 may be made of stainless steel, and include receiving holes 222 for receiving mounting studs to affix the edge node 200 on the machine. In an example, the receiving holes 222 may be threaded. Other mounting or fixation means, including invasive or non-invasive means, may additionally or alternatively be used, such as one or more screws, pins, nails, hooks, barbs, helices, magnets, epoxy, or adhesives.

Enclosed in the case 210 may include a battery and a sensor assembly with accompanying circuitry. The sensor assembly may include one or more sensors configured to sense one or more machine characteristics, such as an accelerometer configured to sense machine vibration, a temperature sensor configured to sense temperature of the machine or machine part and its surrounding environment, a magnetic sensor configured to sense a magnetic field signal, or an acoustic sensor configured to sense acoustic information produced by a machine or machine part while in operation. The accompany circuitry may perform data acquisition, processing, storage, and data communication functions. In some examples, the edge node 200 may include memory slots to receive one or more external storage devices, such as SD cards or flash memories, which may be used to store sensor data and other information. In some examples, the edge node 200 may include an indicator of node functionality, such as a light-emitting diode (LED) or other visual indicators.

The antenna 230 can help transmit and receive data, such as between the edge node 200 and gateways to a cloud system, using electromagnetic waves of a specified frequency or frequencies. The antenna 230 may transmit and receive electromagnetic waves in ultra-high or super high frequency ranges. In an example, the antenna 230 operates at a frequency of approximately 2.5 GHz.

The edge node 200 may have egress, via a wireless communication network, to an external or remote data receiver or processing device. In some examples, a plurality of sensor nodes each resembling the edge node 200 may be inter-communicated to form a sensor network, such as a Mesh network. The edge node 200 may include self-forming multi-hop mesh of nodes, known as "Motes", which connect directly and dynamically to other nodes and cooperate with one another to efficiently collect and route data from/to clients. Such a mesh network can dynamically self-organize and self-configure, which can reduce installation overhead. A network manager can monitor and manage network performance and security, and exchanges data with a host application. Once the edge nodes have joined the mesh network, they can maintain synchronization through time corrections. In an example, the sensor network may include approximately 10-20 edge notes. The number of edge nodes may be updated dynamically, such as when an edge node is activated or deactivated for sensing information of machine characteristics. In some examples, the edge nodes may be inter-communicated using radio-frequency telemetry link or a Bluetooth wireless link.

In some examples, the edge node 200 may be communicatively coupled to a cloud that provides data storage, computing services such as machine fault analytics, and provisioning of customer services, among others. The cloud can be updated with access policies or whitelists. The cloud may have a scalable infrastructure that supports the deployed services for sensor data storage and computation. In an example, the cloud may be a part of a cloud platform configured to dynamically assign the physical and virtual resources to the machine health monitoring system 100 according to the system demand, such as number of edge nodes, amount of sensor data provided to the cloud, or quality-of-service (QoS) requirements. Data and computing services in the cloud may be accessed such as via Internet connection (e.g., Ethernet, or wireless connection such as WiFi or a cellular network). Data communication may follow Transmission Control Protocol/Internet Protocol (TCP/IP), Wi-Fi Protected Access security protocol, cellular network protocols, Long-Term Evolution (LTE), or other wireless network protocols. As may be appreciated by one skilled in the art, other network topologies and arrangements are possible.

The computing services may include analyzing the statistical or physical features produced by the edge node 200, detecting machine anomaly, diagnosing a fault type associated with a machine or a machine part, among other fault analytics services. In some examples, at least a portion of said computing services may be distributed between the cloud and the edge node. Because the data volume of the extracted features is generally less than the raw sensor data, cloud computing using the extracted features may help conserve bandwidth, save storage space, and therefore achieve cost saving.

FIG. 4 is a flowchart illustrating an example algorithm 400 for detecting machine fault using a first reconstructed signal produced by the AE network 123 of FIG. 1 or the AE network 310 of FIG. 3, and a second reconstructed signal (associative output) produced by the associative module 124 of FIG. 1 or the associative module 320 of FIG. 3, along with the dual thresholds associated respective reconstruction signals. The algorithm 400 may be implemented in the machine fault model 122 or the AAE 300.

At step 410, an input vibration signal is received from an accelerometer of an edge node attached to a rotating machine part (e.g., a motor), such as the edge node 200 or the sensor node 110. At step 420, the vibration signal can be preprocessed, and fed into the AE network 123 to produce a first reconstructed signal. A reconstruction loss (e.g., MSE) may be determined between the input vibration signal and the reconstructed signal.

At step 430, the first reconstruction loss may be compared to the first reconstruction loss threshold (RL_{TH-D}). If the first reconstruction loss is less than RL_{TH-D}, then an absence of fault is determined, and a "normality" report can be generated at step 440. If at step 430 the first reconstruction loss is greater than or equal to RL_{TH-D}, then the encoded signal features produced by the AE network at step 420 may be fed into the associative module 124. At step 450, availability of the associative module is checked, and entries (i.e., prestored latent representations) of the dictionary 142 may be searched for an entry that matches the encoded signal features, such as according to a nearest neighbor criterion based on a distance metric. If the associative module is populated and has at least one entry, then at step 460, the stored reconstruction value corresponding to the nearest latent representation is assigned to be the second reconstructed signal for the encoded signal features. At step 470, the second reconstructed signal is compared to the second reconstruction loss threshold (RL_{TH-A}). If the second reconstruction loss is less than RL_{TH-A}, then an absence of fault is determined, and a "normality" report can be generated at step 440. If at step 470 the second reconstruction loss is greater than or equal to RL_{TH-A}, then a fault is determined to be present, or alternatively, a user feedback is sought regarding the normality of the input sensor signal at step 490.

If at step 450 the associative module is not populated or the dictionary 142 is empty, then at step 490 a user feedback is sought regarding the normality of the input sensor signal. As stated above with respect to fault adjudication 152, the user (e.g., a domain expert) may adjudicate the sensor signal on the user interface 150. If the adjudication confirms fault presence, then an "anomaly" report can be generated at step 480. If the adjudication reveals that no fault is present (suggesting that the AE network at step 430 falsely detects a fault which indeed is a normal, healthy machine condition), then at step 492, the encoded signal features of the sensor signal corresponding to the falsely detected fault (and adjudicated as a healthy condition) may be added to the dictionary 142, along with the corresponding reconstructed signal. The updated dictionary 142 may be used in subsequently real-time anomaly detection.

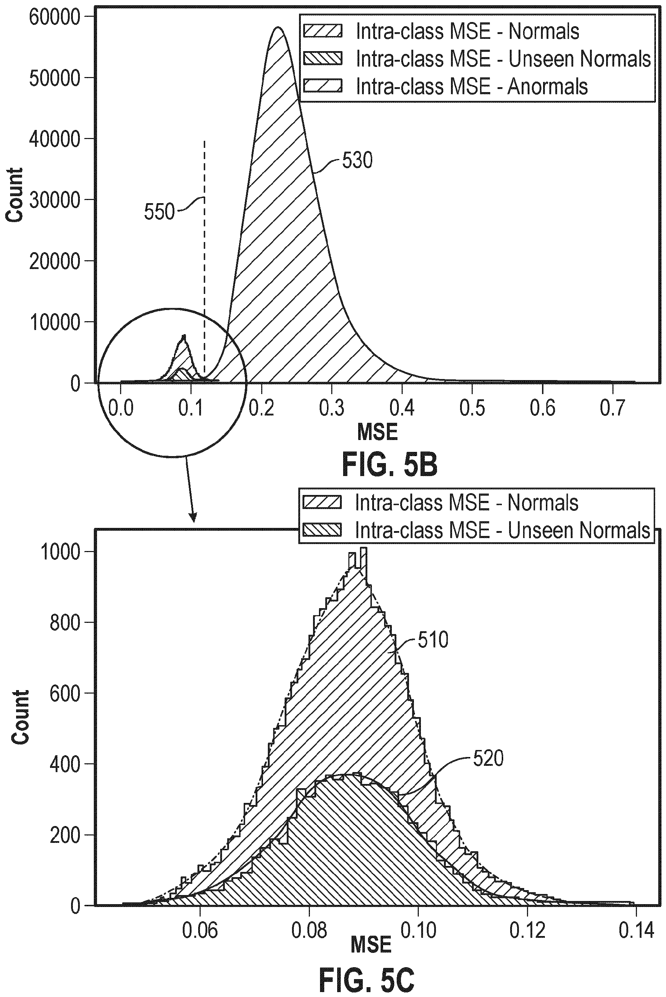

FIGS. 5A-5C illustrate distributions of intra-cluster mean squared error (MSE) signal distances and their use in setting the reconstruction loss threshold (RL_{TH-A}) for the associative module. Diagram 500 in FIG. 5A illustrates intra-cluster MSE (y-axis) values at different motor rotating speeds (x-axis), determined respectively using three distinct datasets: a first vibration dataset collected from rotating motors representing normal, healthy conditions previously encountered by the machine health analyzer circuit 120 (hereinafter the "seen normal" data); a second vibration dataset collected from rotating motors representing normal, healthy conditions unseen to the machine health analyzer circuit 120 (hereinafter the "unseen normal" data); and a third vibration dataset collected from rotating motors representing abnormal or faulty conditions (hereinafter the "abnormal" data). FIG. 5B illustrates statistical distributions of the intra-cluster MSE's across all clusters (i.e., all speeds) as shown in FIG. 5A, respectively determined for the three datasets, including a first distribution 510 for the "seen normal" dataset, a second distribution 520 for the "unseen normal", and a third distribution 530 for the "abnormal" dataset. FIG. 5C shows a zoom-in view of the intra-cluster MSE distribution 510 for the "seen normal" and the intra-cluster MSE distribution 520 for the "unseen normal" data groups as shown in FIG. 5B. The intra-cluster MSE distributions, across all speeds in the illustrated example, demonstrate that anomalous or faulty rotating motors generally have greater intra-cluster MSEs than normal, health rotating motors, and such distinction is consistent across a wide range of operating modes (e.g., rotating speeds). Additionally, the intra-cluster MSE distribution is similar for both seen and unseen normal samples, which are quite separable from the abnormal samples.

The results shown in FIGS. 5A-5C validate the feasibility of using intra-cluster MSE as a basis for setting the reconstruction loss threshold (RL_{TH-A}) for the associative module. Statistical measures like percentiles may be used for determining RL_{TH-A}. For example, using the 95^{th} percentile of the intra-cluster MSE distributions shown in FIG. 5B, the model training circuit 130 may determine the second reconstruction threshold RL_{TH-A} to be approximately 0.1 (MSE value of reconstruction loss), as shown by threshold marker 550.

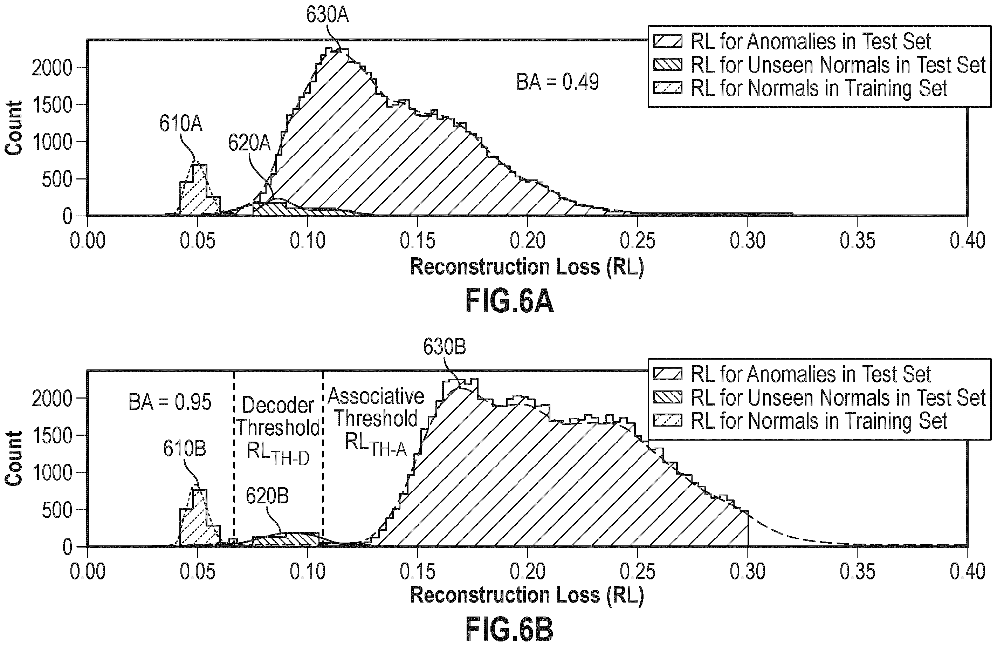

FIGS. 6A-6B illustrate an example of detection performance of an adaptive machine fault model, such as the machine fault model 122 comprising both the AE network 123 and the associative module 124 as described above with respect to FIGS. 1 and 3, in detecting fault in rotational machine parts such as motors, and a comparison to detection using the AE network alone. A test set of motor vibration signals under different operation modes (e.g., rotating speeds) is used to evaluate the fault detection performance. Similar to the training set used for training the machine fault model 122 to determine the reconstruction loss threshold values, the test set may include a first vibration dataset collected from rotating motors representing normal, healthy conditions unseen to the machine health analyzer (hereinafter the "unseen normal" dataset, and a second vibration dataset collected from rotating motors representing abnormal or faulty conditions (hereinafter the "abnormal" dataset). Reconstruction losses can be computed for each vibration signal in the test set. Statistical distributions of the MSE reconstruction losses may be determined respectively for the "unseen normal" dataset and the "abnormal" dataset.

FIG. 6A illustrates statistical distributions of the MSE reconstruction loses using AE network alone (without using the associative module 124), including a reconstruction loss distribution 620A for the "unseen normal" test dataset and a reconstruction loss distribution 630A for the "abnormal" test dataset. A statistical distribution 610A of the "normal" dataset used for training the model (and for determining the reconstruction loss thresholds) is also shown in FIG. 6A. FIG. 6B illustrates statistical distributions of the MSE reconstruction losses using the adaptive machine fault model that includes both the AE network and the associative module, including a reconstruction loss distribution 620B for the "unseen normal" test dataset and a reconstruction loss distribution 630B for the "abnormal" test dataset. A statistical distribution 610B of the "normal" dataset used for training the model (and for determining the reconstruction loss thresholds) is also shown in FIG. 6B.

FIG. 6A shows that, even though the "normal" training set has a distinct distribution profile and consistently smaller reconstruction losses than, and separably by the decoder threshold RL_{TH-D} from, the reconstruction losses of the "anomalies" test data, there is a significant overlap between the reconstruction loss distribution of the "unseen normal" test data and the reconstruction loss distribution of the "anomalies" test, suggesting that AE network alone does not effectively differentiate between the "unseen normal" test data and the "anomalies" test data being analyzed. In contrast, FIG. 6B shows that, by incorporating the adaptable associative module and using the dual reconstruction loss thresholds (RL_{TH-D} for the AE network, and RL_{TH-A} for the associative module) respectively determined through the training process, while the decoder threshold RL_{TH-D} is still able to effectively differentiate the "normal" training set from the "anomalies" test data, reconstruction losses of the "unseen normal" test data are consistently smaller than, and separable by the associative threshold RL_{TH-A} from, the reconstruction losses of the "anomalies" test data. Furthermore, as shown in FIG. 6B, compared to the AE network alone, the inclusion of the associative module leads to an increased reconstruction loss for the "anomalies" test data, as reflected by a shift of the distribution profile for the "anomalies" test data to the right (i.e., higher reconstruction loss).

The reconstruction loss distributions shown in FIGS. 6A-6B demonstrate an improved fault detection performance attributable to the associative module, which can adaptively update the dictionary 142 to recognize previously "unseen normal" machine conditions, thereby reducing false alarm rate (i.e., false declaration of anomalies) and improving overall fault detection accuracy. Various metrics may be used to quantify the detection performance. For example, balanced accuracy (BA), defined as the average of the true positive rate for fault detection performance and the true negative rate for the proper detection of the normalities, is increased from 0.49 when using AE network alone as discussed with respect to FIG. 6A, to 0.95 when incorporating the associative module into the AE network as discussed with respect to FIG. 6B.

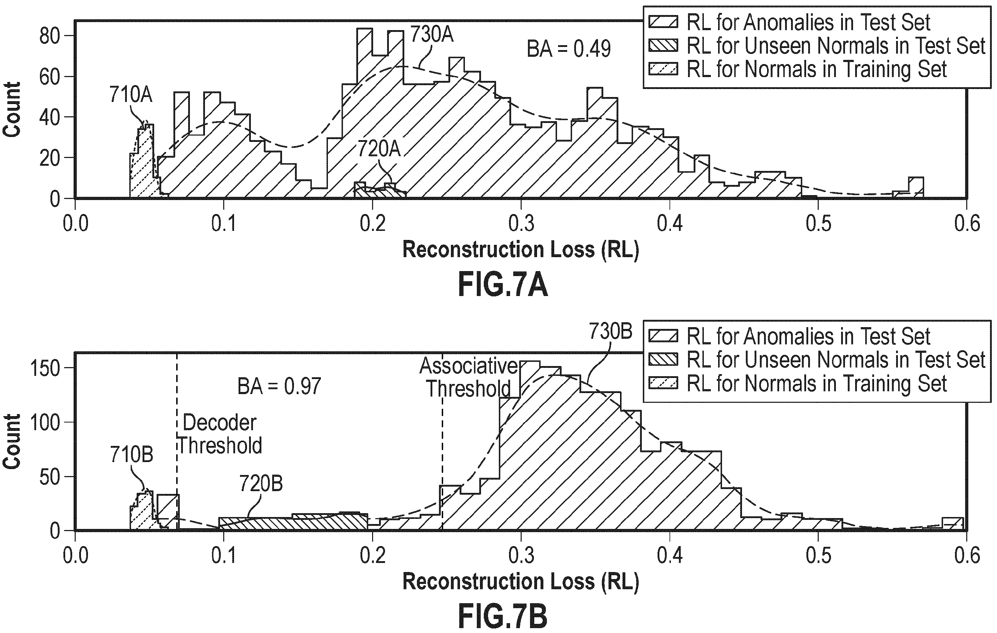

FIGS. 7A-7B illustrate another example of detection performance of an adaptive machine fault model, such as the machine fault model 122 comprising both the AE network 123 and the associative module 124 as described above with respect to FIGS. 1 and 3, in detecting faults in rotational machine parts such as motors, and a comparison to detection using the AE network alone. Another test data different than the one used for generating FIG. 6A and 6B is used to generate the results shown in FIGS. 7A-7B. FIG. 7A illustrates a reconstruction loss distribution 720A for the "unseen normal" test dataset and a reconstruction loss distribution 730A for the "abnormal" test dataset. A statistical distribution 710A of the "normal" dataset used for training the model (and for determining the reconstruction loss thresholds) is also shown in FIG. 7A. FIG. 7B illustrates statistical distributions of the MSE reconstruction losses using the adaptive machine fault model that includes both the AE network and the associative module, including a reconstruction loss distribution 720B for the "unseen normal" test dataset and a reconstruction loss distribution 730B for the "abnormal" test dataset. A statistical distribution 710B of the "normal" dataset used for training the model (and for determining the reconstruction loss thresholds) is also shown in FIG. 7B.

Similar to FIGS. 6A-6B, by incorporating the associative module (along with the adaptively updatable dictionary and the trained reconstruction loss threshold RL_{TH-A}) into the AE network, reconstruction losses for the "unseen normal" test data are consistently smaller than, and separable by the associative threshold RL_{TH-A} from, reconstruction losses for the "anomalies" test data. Performance metric, balanced accuracy (BA), is 0.49 for the AE network as discussed with respect to FIG. 7A, and increases to 0.97 for the combined AE and associative modules as discussed with respect to FIG. 7B.

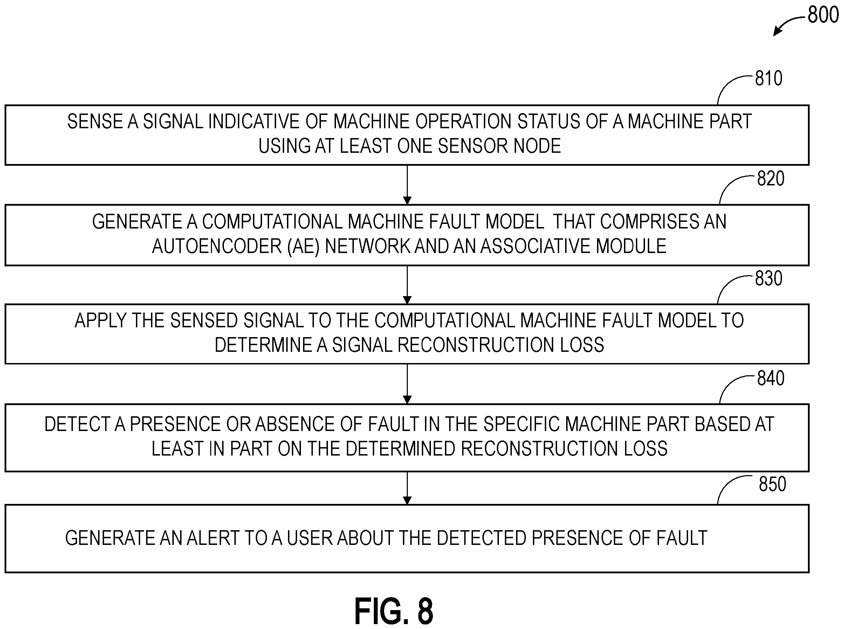

FIG. 8 is a flowchart illustrating an example method 800 of adaptive condition-based monitoring of machine health status, including machine fault detection and diagnosis. The method 800 may be implemented in and executed by a machine health monitor, such as the machine health monitoring system 100 as discussed above.

The method 800 commences at step 810, where at least one sensor node, such as the sensor node 110 shown in FIG. 1 or the edge node 200 shown in FIG. 2, may be deployed to a machine part, and sense a signal indicative of machine operation status therefrom. The at least one sensor node may be mounted on the machine part invasively or non-invasively. Non-invasive mounting means may include magnetic, epoxy, or various adhesives, among others. The at least one sensor node may include one or more sensor types configured to sense machine characteristics such as vibration, energy profiles, magnetic field, temperature, or acoustic information produced by the rotational movement of machine components. In an example, the at least one sensor node includes an accelerometer that can sense machine vibration. In an example, the sensor node may be mounted at or close to a rotational element of a machine, such as a motor, a gearbox, or a bearing, and the sensor data acquired therefrom may contain information of rotations of the machine parts.

At step 820, a computational machine fault model may be generated, such as the machine fault model 122 generated by the machine health analyzer circuit 120 of the system 100. As described above with respect to FIGS. 1 and 3, the computational machine fault model may comprise an autoencoder (AE) network and an associative module. The AE network includes an encoder to encode the sensed signal into a plurality of signal features in a latent feature space, and a decoder to generate a reconstructed signal from the encoded plurality of signal features. The associative module can be constructed to transform the encoded signal features (produced by the encoder of the AE network) into an associative output using a dynamically updatable codebook, such as the dynamically updatable dictionary 142 as shown in FIG. 1. The dynamically updatable codebook represents a correspondence between encoded signal features (i.e., latent representations) of sensor signals sensed from fault-free machine parts of the same type (e.g., fault-free motors) and a reconstruction of the input sensor signal. The dynamically updatable codebook may be constructed using sensor signals collected from machine parts of the same type (e.g., motors) under fault-free conditions. In an example, the dynamically updatable codebook may include multiple entries each representing signal features (latent representations) in a latent space of sensor signals sensed at respective operating modes (e.g., rotating speeds of motors). The latent representations can be mapped to reconstructed sensor signals.

The dynamically updatable codebook may be updated regularly or according to a specific schedule. In an example, the codebook may be updated dynamically during the machine health monitoring and real-time fault detection. The dynamically updatable codebook can be particularly useful in recognizing "new normalities," i.e., actual healthy conditions previously unseen to the machine fault model (particularly unseen to the AE network) during algorithm training. The fault-free machine parts may be recognized by a user, such as a domain expert. For example, the user may review and adjudicate a machine fault falsely detected by, for example, the AE network. The encoded signal feature or latent representation of the sensor signal corresponding to the falsely detected fault (and adjudicated as a new normal and healthy condition) may be added to the dynamically updatable codebook. The updated codebook may then be used in subsequently real-time anomaly detection.

To use the dynamically updatable codebook to transform the encoded signal features (or a portion thereof) of the input sensed signal into a corresponding associative output, stored entries (i.e., stored encoded signal features) in the dynamically updatable codebook may be searched for the closest entry (the "matching" entry). If the codebook is not empty, then one of the stored reconstructed signals in the dynamically updatable codebook that corresponds to the closest entry can be assigned to be the reconstructed signal for the encoded signal features.

At step 830, the sensed signal may be applied to the computational machine fault model to determine a signal reconstruction loss, such as using the reconstruction loss circuit 126. The reconstruction loss may be determined using the reconstructed signal produced by the AE network and the associative output produced by the associative module. In an example, the reconstruction loss may include one or more of a first reconstruction loss represented by a difference metric (such as a mean-squared error, or MSE) between the reconstructed signal and the sensed signal, or a second reconstruction loss represented by a difference metric (e.g., MSE) between the associative output and the sensed signal.

At step 840, a presence or absence of machine fault may be detected based at least in part on the reconstruction loss. In one example, the reconstruction loss may be determined using a combination of the first reconstruction loss and the second reconstruction loss. An example of using both the first and the second reconstruction losses to detect machine fault is a decision tree algorithm as described above with respect to FIG. 4. As described therein, machine fault may be detected based on a comparison of the first reconstruction loss to a first reconstruction loss threshold (RL_{TH-D}) associated with the AE network, and a comparison of the second reconstruction loss to a second reconstruction loss threshold (RL_{TH-A}) associated with the associative module. No fault is determined to be present when the first reconstruction loss is less than the RL_{TH-D}, or when the second reconstruction loss is less than the RL_{TH-A}. A fault can be detected to be present when the first reconstruction loss is greater than or equal to the RL_{TH-D} and when the second reconstruction loss is greater than or equal to the RL_{TH-A}.

The first reconstruction loss threshold (RL_{TH-D}) associated with the AE network and the second reconstruction loss threshold (RL_{TH-A}) associated with the associative module can be respectively determined using the model training circuit 130 shown in FIG. 1. For example, to determine the first reconstruction loss threshold (RL_{TH-D}), a training set of sensor signals indicative of operation status of machine parts of a specific type may be received or constructed, and the threshold RL_{TH-D} can be determined based on a statistical measure of reconstruction losses respectively determined for the sensor signals in the training set. To determine the second reconstruction loss threshold (RL_{TH-A}), a training set of sensor signals indicative of operation status of machine parts of the specific type may be received or constructed. The training set may be partitioned into a plurality of signal clusters each comprising sensor signals collected from at least a portion of the machine parts that operate under a specific mode (such as a cluster of motor vibration signals collected from motors operated at a particular speed or speed range). The threshold RL_{TH-A} can be determined based on a statistical measure of intra-cluster signal distances respectively determined for the plurality of signal clusters in the training set. In some examples, the second reconstruction loss threshold (RL_{TH-A}) may be determined further based on a statistical measure of inter-cluster distances among the plurality of signal clusters in the training set.

At step 850, fault detection results may be provided to a user. The user may be alerted about the detected presence of machine fault. In some examples, fault detection and optionally fault analytics (e.g., detection, diagnostics, or prognostics) may be displayed on a user interface (e.g., a display screen) in a form of interactive dashboard. Upon alert notification, the user may view that status, interpret the results, and take actions such as performing further test, make necessary repairs or other preventive or corrective actions.

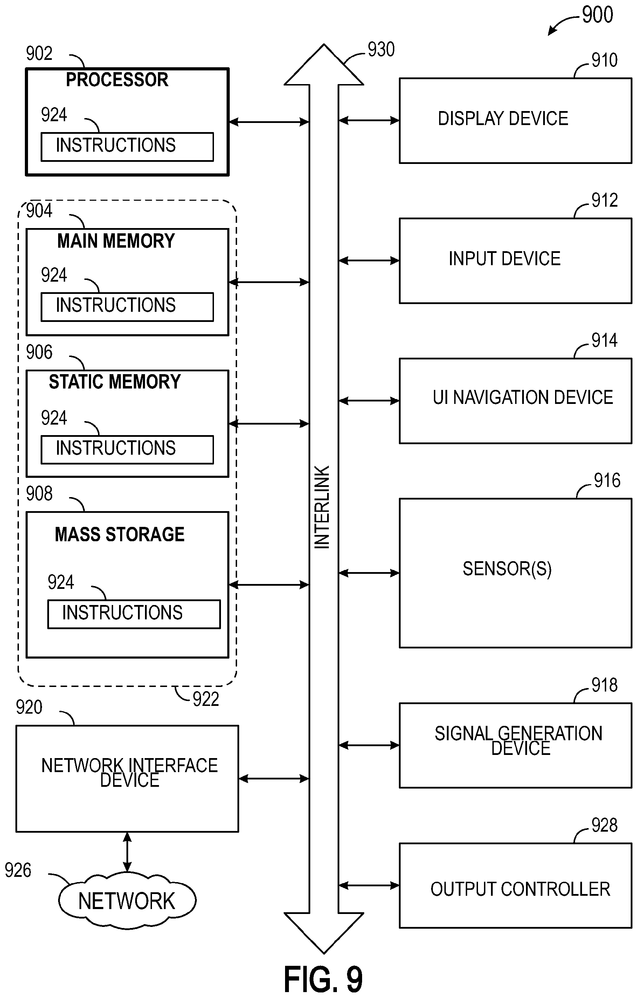

FIG. 9 illustrates a block diagram of an example machine 900 upon which any one or more of the techniques (e.g., methodologies) discussed herein may perform. Portions of this description may apply to the computing framework of various portions of the machine health monitoring system 100.

Examples, as described herein, may include, or may operate by, logic or a number of components, or mechanisms in the machine 900. Circuitry (e.g., processing circuitry) is a collection of circuits implemented in tangible entities of the machine 900 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine-readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine-readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 900 follow.

In alternative embodiments, the machine 900 may operate as a standalone device or may be connected (e.g., networked) to other machines. In a networked deployment, the machine 900 may operate in the capacity of a server machine, a client machine, or both in server-client network environments. In an example, the machine 900 may act as a peer machine in peer-to-peer (P2P) (or other distributed) network environment. The machine 900 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 900 may include a hardware processor 902 (e.g., a central processing unit (CPU), a graphics processing unit (GPU), a hardware processor core, or any combination thereof), a main memory 904, a static memory (e.g., memory or storage for firmware, microcode, a basic-input-output (BIOS), unified extensible firmware interface (UEFI), etc.) 906, and mass storage 908 (e.g., hard drive, tape drive, flash storage, or other block devices) some or all of which may communicate with each other via an interlink (e.g., bus) 930. The machine 900 may further include a display unit 910, an alphanumeric input device 912 (e.g., a keyboard), and a user interface (UI) navigation device 914 (e.g., a mouse). In an example, the display unit 910, input device 912, and UI navigation device 914 may be a touch screen display. The machine 900 may additionally include a signal generation device 918 (e.g., a speaker), a network interface device 920, and one or more sensors 916, such as a global positioning system (GPS) sensor, compass, accelerometer, or one or more other sensors. The machine 900 may include an output controller 928, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 902, the main memory 904, the static memory 906, or the mass storage 908 may be, or include, a machine-readable medium 922 on which is stored one or more sets of data structures or instructions 924 (e.g., software) embodying or utilized by any one or more of the techniques or functions described herein. The instructions 924 may also reside, completely or at least partially, within any of registers of the processor 902, the main memory 904, the static memory 906, or the mass storage 908 during execution thereof by the machine 900. In an example, one or any combination of the hardware processor 902, the main memory 904, the static memory 906, or the mass storage 908 may constitute the machine-readable medium 922. While the machine-readable medium 922 is illustrated as a single medium, the term "machine-readable medium" may include a single medium or multiple media (e.g., a centralized or distributed database, and/or associated caches and servers) configured to store the one or more instructions 924.

The term "machine-readable medium" may include any medium that is capable of storing, encoding, or carrying instructions for execution by the machine 900 and that cause the machine 900 to perform any one or more of the techniques of the present disclosure, or that is capable of storing, encoding or carrying data structures used by or associated with such instructions. Non-limiting machine-readable medium examples may include solid-state memories, optical media, magnetic media, and signals (e.g., radio frequency signals, other photon based signals, sound signals, etc.). In an example, a non-transitory machine-readable medium comprises a machine-readable medium with a plurality of particles having invariant (e.g., rest) mass, and thus are compositions of matter. Accordingly, non-transitory machine-readable media are machine-readable media that do not include transitory propagating signals. Specific examples of non-transitory machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

The instructions 924 may be further transmitted or received over a communications network 926 using a transmission medium via the network interface device 920 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, peer-to-peer (P2P) networks, among others. In an example, the network interface device 920 may include one or more physical jacks (e.g., Ethernet, coaxial, or phone jacks) or one or more antennas to connect to the communications network 926. In an example, the network interface device 920 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 900, and includes digital or analog communications signals or other intangible medium to facilitate communication of such software. A transmission medium is a machine-readable medium.

Various embodiments are illustrated in the figures above. One or more features from one or more of these embodiments may be combined to form other embodiments. The method examples described herein can be machine or computer-implemented at least in part. Some examples may include a computer-readable medium or machine-readable medium encoded with instructions operable to configure an electronic device or system to perform methods as described in the above examples. An implementation of such methods may include code, such as microcode, assembly language code, a higher-level language code, or the like. Such code may include computer readable instructions for performing various methods. The code can form portions of computer program products. Further, the code can be tangibly stored on one or more volatile or non-volatile computer-readable media during execution or at other times.

The above detailed description is intended to be illustrative, and not restrictive. The scope of the disclosure should, therefore, be determined with references to the appended claims, along with the full scope of equivalents to which such claims are entitled.

## Claims

1. A system for monitoring machine health conditions, the system comprising:
at least one sensor node configured to sense a signal indicative of machine operation status from a specific machine part;
a machine health analyzer circuit configured to:
generate a computational machine fault model that comprises (i) an autoencoder (AE) network to encode the sensed signal into a plurality of signal features in a latent feature space, and to produce a reconstructed signal from the encoded plurality of signal features, and (ii) an associative module to transform the encoded signal features into an associative output using a dynamically updatable codebook;
apply the sensed signal to the computational machine fault model to determine a signal reconstruction loss using the reconstructed signal produced by the AE network and the associative output produced by the associative module; and
detect a presence or absence of fault in the specific machine part based at least in part on the determined reconstruction loss; and
a user interface configured to alert a user about the detected presence of fault.

2. The system of claim 1, wherein the at least one sensor node includes an accelerometer configured to sense a machine vibration signal from a rotating machine part at a specific rotating speed,
wherein the machine health analyzer circuit is configured to detect the presence of absence of fault in the rotating machine part based at least in part on the reconstruction loss determined at the specific rotating speed.

3. The system of any of claims 1-2, wherein the signal reconstruction loss includes one or more of (i) a first reconstruction loss represented by a difference metric between the reconstructed signal and the sensed signal, or (ii) a second reconstruction loss represented by a difference metric between the associative output and the sensed signal,
wherein the machine health analyzer circuit is configured to detect the presence or absence of fault in the specific machine part based on one or more of the first reconstruction loss or the second reconstruction loss.

4. The system of claim 3, wherein the signal reconstruction loss includes both the first reconstruction loss and the second reconstruction loss,
wherein the machine health analyzer circuit is configured to detect the presence or absence of fault in the specific machine part based on a combination of (i) a comparison of the first reconstruction loss to a first reconstruction loss threshold (RL_{TH-D}) associated with the AE network, and (ii) a comparison of the second reconstruction loss to a second reconstruction loss threshold (RL_{TH-A}) associated with the associative module.

5. The system of claim 4, wherein the machine health analyzer circuit is configured to:
determine an absence of fault in the specific machine part when at least one of the first reconstruction loss is less than the RL_{TH-D}, or the second reconstruction loss is less than the RL_{TH-A}; and
determine a presence of fault in the specific machine part when (i) the first reconstruction loss is greater than or equal to the RL_{TH-D}, and (ii) the second reconstruction loss is greater than or equal to the RL_{TH-A}.

6. The system of any of claims 4-5, wherein the machine health analyzer circuit is configured to:
access or construct a database of training set of sensor signals indicative of operation status of machine parts of a same type as the specific machine part; and
determine the first reconstruction loss threshold (RL_{TH-D}) based on a statistical measure of reconstruction losses respectively determined for the sensor signals in the training set.

7. The system of any of claims 4-6, wherein the machine health analyzer circuit is configured to:
access or construct a database of training set of sensor signals indicative of operation status of machine parts of a same type as the specific machine part, the training set comprising a plurality of signal clusters each comprising sensor signals collected from at least a portion of the machine parts operating under a specific mode; and
determine the second reconstruction loss threshold (RL_{TH-A}) based on intra-cluster distances respectively determined for the plurality of signal clusters in the training set.

8. The system of claim 7, wherein the machine health analyzer circuit is configured to determine the second reconstruction loss threshold (RL_{TH-A}) based on a statistical measure of the intra-cluster distances respectively determined for the plurality of signal clusters in the training set.

9. The system of claim 8, wherein training set includes machine vibration signals respectively sensed from rotating machine parts of a same type as the specific machine part at different rotating speeds or speed ranges,
wherein the plurality of signal clusters each comprise machine vibration signals collected under a specific rotating speed or speed range.

10. The system of any of claims 7-9, wherein the machine health analyzer circuit is configured to determine the second reconstruction loss threshold (RL_{TH-A}) further based on a statistical measure of inter-cluster reconstruction losses among the plurality of signal clusters in the training set.

11. The system of any of claims 1-10, wherein the machine health analyzer circuit is configured to construct the dynamically updatable codebook using sensor signals collected from fault-free machine parts of a same type as the specific machine part, the dynamically updatable codebook establishing a mapping from (i) stored encoded signal features of the sensor signals collected from the fault-free machine parts to (ii) stored reconstructed sensor signals.

12. The system of claim 11, wherein the machine health analyzer circuit is configured to determine the associative output for the sensed signal using the associative module, including to:
search the stored encoded signal features in the dynamically updatable codebook for a closest entry to the encoded signal features of the sensed signal; and
determine the associative output for the sensed signal to be one of the stored reconstructed signals in the dynamically updatable codebook that corresponds to the closest entry.

13. A method for monitoring machine health condition, the method comprising:
sensing a signal indicative of machine operation status using at least one sensor node deployed to a specific machine part;
generating, via a machine health analyzer circuit, a computational machine fault model that comprises (i) an autoencoder (AE) network to encode the sensed signal into a plurality of signal features in a latent feature space, and to produce a reconstructed signal from the encoded plurality of signal features, and (ii) an associative module to transform the encoded signal features into an associative output using a dynamically updatable codebook;
applying the sensed signal to the computational machine fault model to determine a signal reconstruction loss using the reconstructed signal produced by the AE network and the associative output produced by the associative module;
detecting a presence or absence of fault in the specific machine part based at least in part on the determined reconstruction loss; and
generating, via a user interface, an alert to a user about the detected presence of fault.

14. The method of claim 13, wherein sensing the signal indicative of machine operation status includes sensing a machine vibration signal from a rotating machine part at a specific rotating speed,
wherein detecting the presence of absence of fault in the rotating machine part is based at least in part on the reconstruction loss determined at the specific rotating speed.

15. The method of any of claims 13-14, comprising constructing the dynamically updatable codebook using sensor signals collected from fault-free machine parts of a same type as the specific machine part, the dynamically updatable codebook establishing a mapping from (i) stored encoded signal features of the sensor signals from the fault-free machine parts to (ii) stored reconstructed sensor signals.
